# EUROPÄISCHE PATENTSCHRIFT

(11) **EP 1 895 873 B1**
(45) Veröffentlichungstag und Bekanntmachung des Hinweises auf die Patenterteilung: **02.08.2017**
(21) Anmeldenummer: 06753756.3
(22) Anmeldetag: 20.05.2006
(51) Int. Cl.: A47C 7/18, B60N 2/58

(54) **PROFIL ZUR BEFESTIGUNG EINES BEZUGS AN EINEM TRÄGERKÖRPER, INSBESONDERE EINER KOPFSTÜTZE EINES KRAFTFAHRZEUGS**
PROFILE FOR FASTENING A COVER ON A SUPPORTING BODY, PARTICULARLY A HEADREST OF A MOTOR VEHICLE
PROFILE DE FIXATION D'UNE GARNITURE SUR UN CORPS SUPPORT, EN PARTICULIER, SUR UN APPUI-TETE D'UN VEHICULE AUTOMOBILE

(30) Priorität: 21.06.2005 DE 102005028569
(43) Veröffentlichungstag der Anmeldung: 12.03.2008
(73) Patentinhaber: Adient Luxembourg Holding S.à r.l., 2453 Luxembourg (LU)
(72) Erfinder: HENNIG, Lars, 42799 Leichlingen (DE); POSNIEN, Axel, 51399 Burscheid (DE); SCHULZE, Uwe, 51377 Leverkusen (DE)
(74) Vertreter: Liedhegener, Ralf
(86) Internationale Anmeldenummer: PCT/EP2006/004795
(87) Internationale Veröffentlichungsnummer: WO 2006/136250

(56) Entgegenhaltungen:
- DE-C1- 3 920 529
- FR-A1- 2 686 553
- FR-A1- 2 821 029

## Beschreibung

Die Erfindung betrifft ein mit einem Bezug verbindbares Profil zur Befestigung des Bezugs an einem Trägerkörper, wobei das Profil eine Ausnehmung zur Aufnahme eines Verbindungsbereichs, insbesondere einer Naht, von Bezugsegmenten eines zumindest zweistückigen Bezugs aufweist. Die Erfindung betrifft ferner eine Anordnung zur Befestigung eines zumindest zweiteiligen Bezugs an einem Trägerkörper, mit einem in einen Kanal (8) des Trägerkörpers rastend einsetzbaren, mit einem Bezug verbindbaren Profil, sowie eine damit ausgestattete Kopfstütze.

### Stand der Technik

Ein Profil und eine Anordnung der eingangs genannten Art sind aus der Patentanmeldung FR 2 821 029 A1 bekannt. Das dort offenbarte, mit einem relativ großen Querschnitt versehene Profil nimmt in einer Ausnehmung den Übergangsbereich zwischen dem Sitzbezug eines Fahrzeugsitzes und einem Rückenlehnen-Verkleidungspanel auf. Zur Befestigung komplexer Sitzbezüge in filigranen Bauteilen beengtem Bauraum, beispielsweise Kopfstützen, ist das Profil nicht geeignet.

Ein weiteres Profil ist aus Offenlegungsschrift DE 199 16 542 C1 bekannt und dient zur Befestigung eines Bezugs eines Fahrzeugsitzes. Dieser ist mit einem umlaufenden U-förmigen Abhängekanal versehen, der einen im Wesentlichen rechteckigen Querschnitt aufweist. Eine in diesen Querschnitt hineinragende Rastnase ist dazu vorgesehen, ein in den Abhängekanal eingesetztes, mit dem Bezug vernähtes Profil zu hintergreifen und den Bezug auf diese Weise am Fahrzeugsitz zu fixieren. Das Profil ist insgesamt dünnwandig ausgebildet und an seinem hintergriffenen Abschnitt bogenförmig ausgeführt, wobei sich das somit entgegen der Einschubrichtung weisende freie Ende des Profils an der Rastnase abstützt. Der Bezug weist einen Überlappungsbereich mit dem Profil auf, durch welchen die Verbindungsnaht geführt ist, und wird an dem zugeordneten Ende des Profils etwa rechtwinklig umgelenkt.

Derartige Anordnungen sind insbesondere bei der Befestigung steifer und daher in der Regel mehrteilig zusammengesetzter Bezüge (beispielsweise aus Leder) an komplex geformten Trägerkörpern sowohl hinsichtlich des Erscheinungsbilds als auch bezüglich der Montage unbefriedigend.

### Aufgabe

Der Erfindung liegt die Aufgabe zugrunde, ein besonders kompaktes, bauraumsparendes Profil und eine Anordnung zur Bezugsbefestigung bereitzustellen, mittels dessen auch komplexe Sitzbezüge an kleinbauenden Komponenten, beispielsweise Kopfstützen, sicher und formschön befestigt werden können.

### Lösung

Die Aufgabe wird bei einem Profil der zuvor genannten Art dadurch gelöst, dass das Profil einen ersten, in einen Kanal des Trägerkörpers rastend einsetzbaren Abschnitt, einen sich daran anschließenden Abschnitt zum Vernähen des Profils mit dem Bezug und nachfolgend einen Abschnitt mit der Ausnehmung aufweist. Eine gattungsgemäße Anordnung ist dadurch gekennzeichnet, dass ein in einen Kanal des Trägerkörpers rastend einsetzbarer Abschnitt des Profils drehfest im Kanal angeordnet ist.

Die Unteransprüche betreffen bevorzugte Ausführungsformen der Erfindung.

### Figuren

Die Figuren stellen beispielhaft und schematisch eine Ausführung der Erfindung dar.

Es zeigen:
- Fig. 1: einen Schnitt durch einen mit einem Bezug versehenen Polsterkörper unter Verwendung eines erfindungsgemäß ausgebildeten Profils,
- Fig. 2: einen gesonderten und vergrößerten Schnitt durch das in Fig. 1 dargestellte Profil,
- Fig. 3: das Profil nach Fig. 2 in seinem Einbauzustand.

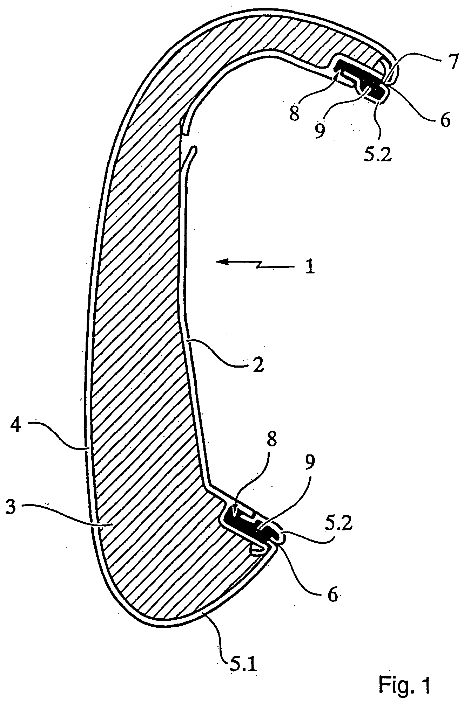

Der in Fig. 1 dargestellte Polsterkörper 1 ist Teil einer Fahrzeugkopfstütze und besteht aus einem Trägerkörper 2, einem Schaumteil 3 und einem das Schaumteil 3 sichtseitig abdeckenden Bezug 4, beispielsweise aus Leder. Der Bezug 4 ist wegen seiner komplexen Gestalt aus einem äußeren Bezugsegment 5.1 und einem inneren Bezugsegment 5.2 zusammengesetzt, die miteinander mittels einer umlaufenden Naht 6 verbunden sind. Durch die Naht 6 entsteht am Bezug 4 eine nach innen auskragende Überlappung 7 der Bezugsegmente 5.1 und 5.2.

Der Trägerkörper 2 bildet randseitig einen rechteckig und rahmenartig umlaufenden Kanal 8 aus, in welchem ein mit dem inneren Bezugsegment 5.2 vernähtes Profil 9 verrastet ist. Das Profil 9 ist nicht vollumfänglich umlaufend im Kanal 8 eingesetzt, sondern nur in Stücken unter Auslassung der Eckbereiche des vom Kanal 8 gebildeten Rahmens am Bezug angeordnet. Die einzelnen Stücke des Profils 9 werden somit beim Einsetzen in den Kanal 8 nicht oder nur geringfügig in ihrer Längserstreckung gebogen.

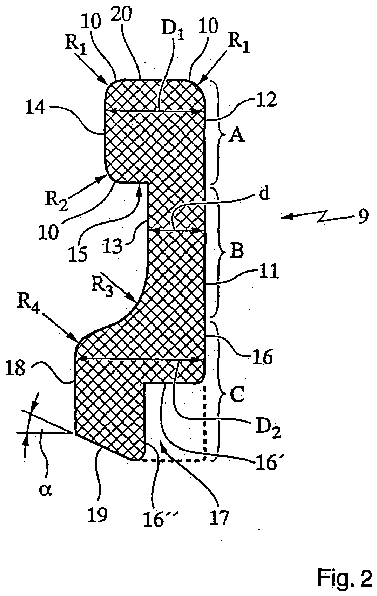

Das aus geschäumtem Polypropylen durch Extrusion gefertigte Profil 9 weist, wie aus Fig. 2 ersichtlich, einen ersten rechteckigen, nämlich etwa quadratischen Abschnitt A mit leicht gerundeten Kanten 10 auf (Radien R1, R2), der bis auf die Poren der Schaumstruktur kompakt ausgebildet ist, also keine weiteren Hohlräume aufweist und somit relativ verformungssteif ist. Dieser Abschnitt A dient der Verrastung im Kanal 8. An den Abschnitt A schließt sich ein gleichfalls kompakter, bandartiger Abschnitt B an, dessen eine Flächenseite 11 bündig zur Seitenfläche 12 des Abschnitts A verläuft, während die parallel verlaufende Flächenseite 13 des Abschnitts B gegenüber der anderen Seitenfläche 14 des Abschnitts A einen Rücksprung 15 aufweist. Die Materialdicke d im Bereich des Abschnitts B ist somit geringer als die Materialdicke D1 im Abschnitt A. Im Ausführungsbeispiel beträgt die Materialdicke d etwa 55% der Materialdicke D1.

In Verlängerung des Abschnitts B bildet das Profil 9 einen Abschnitt C aus, dessen Seitenfläche 16 zunächst eine Verlängerung der Flächenseite 11 des Abschnitts B darstellt, nachfolgend jedoch gegenüber dieser zurückspringt und eine rechteckige Ausnehmung 17 ausbildet. Diese ist stufenartig (Seitenflächen 16', 16") im der Seitenfläche 16 zugeordneten Eckbereich des Abschnitts C angeordnet, wobei die Seitenfläche 16" im Bereich der Ausnehmung 17 etwa in gedachter Verlängerung der Flächenseite 13 des Abschnitts B verläuft.

Auf der gegenüberliegenden Profilseite springt der Abschnitt C gegenüber Abschnitt B unter Ausbildung einer Seitenfläche 18 vor, die zu der gegenüberliegenden Seitenfläche 16 parallel verläuft und mit der gleichfalls parallelen Flächenseite 13 des Abschnitts B durch eine Anordnung eines ersten konkaven Radius R3 und eines sich daran anschließenden konvexen Radius R4 verbunden ist. Gegenüber der Seitenfläche 14 des Abschnitts A ist die Seitenfläche 18, erneut parallel, nach außen versetzt, so dass die größte Materialdicke D2 im Abschnitt C größer ist als die Materialdicke D1. Im Ausführungsbeispiel beträgt die Materialdicke D2 etwa das 1,3fache der Materialdicke D1. Im der Ausnehmung 17 gegenüberliegenden Bereich schließt sich an die Seitenfläche 18 eine Schrägfläche 19 an, die nach außen in Richtung der Ausnehmung 17 verläuft und in diese einmündet. Die Schrägfläche 19 liegt somit der die Seitenflächen 12, 14 verbindenden Stirnfläche 20 des Abschnitts A gegenüber und verläuft gegenüber dieser geneigt. Der Neigungswinkel α beträgt dabei etwa 25°. Auch der Abschnitt C ist, von den Poren der Schaumstruktur abgesehen, kompakt ausgebildet.

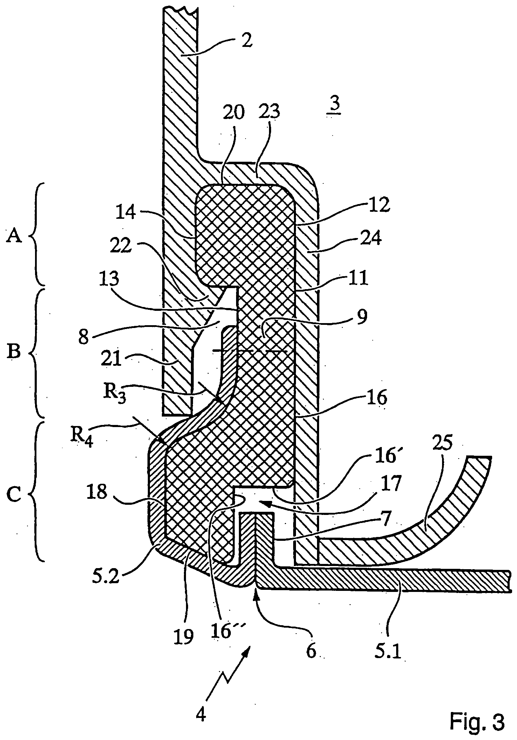

Der zur Aufnahme des Profils 9 endseitig in den Trägerkörper 2 vorzugsweise durch Spritzgießen eingeformte Kanal 8 ist näherungsweise U-förmig ausgebildet, wobei ein kürzerer Schenkel 21 (Fig. 3) mit einer nach innen in den Kanal 8 ragenden Rastnase 22 ausgestattet ist. Die Rastnase 22 hintergreift den Rücksprung 15 des Profils 9, wobei sich der diesseits der Rastnase 22 befindliche Teil des Schenkels 21 ebenso wie die Basis 23 und der andere Schenkel 24 des U-förmigen Kanals 8 unter leichter Spannung an die Seitenflächen 12, 14 und die Stirnfläche 20 des Profils 9 anschmiegen. Abschnitt A des Profils 9 füllt den betreffenden, näherungsweise quadratischen Querschnitt des Kanals 8 bis in seine Eckbereiche aus. Das Profil 9 wird hierdurch sowohl hinsichtlich seiner Einschieberichtung als auch drehfest im Kanal 8 gehalten.

Während sich der kürzere Schenkel 21 jenseits der Rastnase 22 noch bis über den Abschnitt B des Profils 9 erstreckt, verläuft der parallele längere Schenkel 24 noch entlang der Flächenseite 11 und Seitenfläche 16 bis zum Ende des Abschnitts C. Dort ist er mit einer bogenartig vom Profil 9 in Gegenrichtung verlaufenden Abknickung 25 versehen, die im Schaumteil 3 ausläuft. Die nach außen offene Ausnehmung 17 wird somit durch drei aneinandergrenzende Wandungen, nämlich die Seitenflächen 16' und 16" des Profils 9 sowie den Schenkel 24 des Trägerkörpers 2 begrenzt.

Das innere Bezugsegment 5.2 ist im Bereich des Abschnitts B mit dem Profil 9 vernäht, wobei der Bezug 4 am Profil 9 anliegt und gegenüber dem Schenkel 21 beabstandet ist. Das geschäumte Polypropylen des Profils 9 nimmt dabei keinen Schaden. Das Bezugsegment 5.2 wird entlang der Radien R3 und R4 aus dem Spalt zwischen Abschnitt B und dem Schenkel 21 herausgeführt und liegt nachfolgend an der Seitenfläche 18 und der Schrägfläche 19 des Profils 9 an. In diesem Bereich wird der Bezug 4 um einen Winkel von rund 115° in Richtung des Schaumteils 3 umgelenkt. Die Naht 6, welche die Bezugsegmente 5.1 und 5.2 miteinander verbindet, ist dabei so angeordnet, dass die Überlappung 7 in die Ausnehmung 17 hineinragt. Im sichtbaren Bereich der Naht 6 bildet sich somit kein störender, nach außen aufwerfender Wulst aus, so dass auch in den Eckbereichen des vom Kanal 8 gebildeten umlaufenden Rahmens eine ansprechende Anmutung bewahrt bleibt. Durch die (unter Vernachlässigung elastischer Verformungen) im Wesentlichen drehfeste Fixierung des Profils 9 werden ferner Welligkeiten des Bezugs 4 vermieden.

### Bezugszeichen

- 1: Polsterkörper
- 2: Trägerkörper
- 3: Schaumteil
- 4: Bezug
- 5.1, 5.2: Bezugsegment
- 6: Naht
- 7: Überlappung
- 8: Kanal
- 9: Profil
- 10: Kante
- 11: Flächenseite
- 12: Seitenfläche
- 13: Flächenseite
- 14: Seitenfläche
- 15: Rücksprung
- 16: Seitenfläche
- 17: Ausnehmung
- 18: Seitenfläche
- 19: Schrägfläche
- 20: Stirnfläche
- 21: Schenkel
- 22: Rastnase
- 23: Basis
- 24: Schenkel
- 25: Abknickung

## Patentansprüche

1. Mit einem Bezug (4) verbindbares Profil (9) zur Befestigung des Bezugs an einem Trägerkörper (2), wobei das Profil (9) eine Ausnehmung (17) zur Aufnahme eines Verbindungsbereichs, insbesondere einer Naht (6), von Bezugsegmenten (5.1, 5.2) eines zumindest zweistückigen Bezugs (4) aufweist, **dadurch gekennzeichnet, dass** das Profil (9) einen ersten, in einen Kanal (8) des Trägerkörpers (2) rastend einsetzbaren Abschnitt (A), einen sich daran anschließenden Abschnitt (B) zum Vernähen des Profils mit dem Bezug (4) und nachfolgend einen Abschnitt (C) mit der Ausnehmung (17) aufweist.

2. Profil nach Anspruch 1, **dadurch gekennzeichnet, dass** der Abschnitt (B) gegenüber den Abschnitten (A) und (C) dünnwandig ausgebildet ist.

3. Profil nach Anspruch 1 oder 2, **dadurch gekennzeichnet, dass** die Ausnehmung (17) in einem dem Trägerkörper (2) zugewandten Eckbereich des Abschnitts (C) ausgebildet ist.

4. Profil nach einem der Ansprüche 1-3 **dadurch gekennzeichnet, dass** der Abschnitt (C) mit einem zwischen der Ausnehmung (17) und dem Abschnitt (B) angeordneten Bereich zur Umlenkung des Bezugs, insbesondere um einen Winkel von 90° bis 130°, versehen ist.

5. Profil nach einem der Ansprüche 1-4, **dadurch gekennzeichnet, dass** das Profil (9) aus einem vorzugsweise geschäumten Kunststoff, insbesondere Polyethylen oder Polypropylen, gefertigt, bevorzugt extrudiert ist.

6. Kopfstütze mit einem Profil nach einem der Ansprüche 2-5 bei welcher der Kanal (8) an einer rahmenartig umlaufenden Kante des Trägerkörpers (2) der Kopfstütze angeordnet ist.

## Claims

1. Profile (9), which can be connected to a cover (4), for fastening the cover on a supporting body (2), wherein the profile (9) has a recess (17) for receiving a connecting region, in particular a seam (6), of cover segments (5.1, 5.2) of an at least two-piece cover (4), **characterized in that** the profile (9) has a first section (A), which can be inserted in a latching manner into a channel (8) of the supporting body (2), a section (B), which adjoins said first section, for sewing the profile to the cover (4), and then a section (C) with the recess (17).

2. Profile according to Claim 1, **characterized in that** the section (B) is of thin-walled design in comparison to the sections (A) and (C).

3. Profile according to Claim 1 or 2, **characterized in that** the recess (17) is formed in a corner region of the section (C), which corner region faces the supporting body (2).

4. Profile according to one of Claims 1 to 3, **characterized in that** the section (C) is provided with a region, which is arranged between the recess (17) and the section (B), for deflecting the cover, in particular by an angle of 90° to 130°.

5. Profile according to one of Claims 1 to 4, **characterized in that** the profile (9) is manufactured, preferably extruded, from a preferably foamed plastic, in particular polyethylene or polypropylene.

6. Headrest with a profile according to one of Claims 2 to 5, in which the channel (8) is arranged on an edge of the supporting body (2) of the headrest, which edge encircles the supporting body in the manner of a frame.

## Revendications

1. Profilé (9) pouvant être raccordé à un revêtement (4) pour la fixation du revêtement à un corps de support (2), le profilé (9) présentant un évidement (17) pour recevoir une région de raccordement, en particulier une couture (6), de segments de revêtement (5.1, 5.2) d'un revêtement (4) au moins en deux parties, **caractérisé en ce que** le profilé (9) présente une première portion (A) pouvant être insérée par encliquetage dans un canal (8) du corps de support (2), une portion (B) se raccordant à celle-ci et prévue pour la couture du profilé au revêtement (4) puis une portion (C) comprenant l'évidement (17).

2. Profilé selon la revendication 1, **caractérisé en ce que** la portion (B) est réalisée avec une paroi mince par rapport aux portions (A) et (C).

3. Profilé selon la revendication 1 ou 2, **caractérisé en ce que** l'évidement (17) est réalisé dans une région de coin de la portion (C) tournée vers le corps de support (2).

4. Profilé selon l'une quelconque des revendications 1 à 3, **caractérisé en ce que** la portion (C) est pourvue d'une région disposée entre l'évidement (17) et la portion (B) pour replier le revêtement, en particulier suivant un angle de 90° à 130°.

5. Profilé selon l'une quelconque des revendications 1 à 4, **caractérisé en ce que** le profilé (9) est fabriqué à partir d'une matière plastique de préférence moussée, en particulier de polyéthylène ou de polypropylène, de préférence par extrusion.

6. Appui-tête comprenant un profilé selon l'une quelconque des revendications 2 à 5, dans lequel le canal (8) est disposé au niveau d'une arête périphérique de type cadre du corps de support (2) de l'appui-tête.
